# FASCICULE DE BREVET EUROPEEN

(11) **EP 2 630 865 B1**
(45) Date de publication et mention de la délivrance du brevet: **13.05.2015**
(21) Numéro de dépôt: 13155882.7
(22) Date de dépôt: 20.02.2013
(51) Int. Cl.: A21B 3/02

(54) **Porte de four à soles démontable**
Abnehmbare Tür eines Etagenbackofen
Removable door for a deck oven

(30) Priorité: 22.02.2012 FR 1251583
(43) Date de publication de la demande: 28.08.2013
(73) Titulaire: EUROFOURS, 59144 Gommegnies (FR)
(72) Inventeur: Airoldi, Frédéric, 51120 SEZANNE (FR); Lemoine, Jérôme, 59460 JEUMONT (FR)
(74) Mandataire: Balesta, Pierre

(56) Documents cités:
- DE-U1-202008 016 182
- DE-U1-202009 011 934
- FR-A- 1 474 965

## Description

### Arrière-plan de l'invention

La présente invention concerne le domaine des fours de boulangerie-pâtisserie.

Elle concerne plus précisément le domaine des fours à soles, qui comprennent généralement une pluralité de chambres de cuisson disposées les unes sur les autres.

L'invention concerne un four à soles comportant au moins une première chambre de cuisson présentant une entrée et au moins une porte pivotante munie d'une paroi s'étendant selon une direction longitudinale, la porte pivotante étant destinée à obturer ladite entrée, dans lequel :
- la porte pivotante comprend un axe de pivotement parallèle à la direction longitudinale,
- la porte pivotante présente un état fermé dans lequel elle obture l'entrée de la première chambre de cuisson et un état ouvert dans lequel la porte pivotante n'obture pas l'entrée de la première chambre de cuisson de sorte que, dans l'état ouvert, une partie de la paroi s'étend à l'intérieur de la première chambre de cuisson, la porte pivotante passant de l'état fermé à l'état ouvert par pivotement autour de son axe de pivotement selon un premier sens de rotation, ledit axe de pivotement étant dans une première position lorsque la porte pivotante se trouve dans l'état ouvert ou dans l'état fermé.

Une telle porte pivotante est notamment décrite dans DE 20 2009 011934 U1 et DE 20 2008 016182 U1.

Lorsque le boulanger souhaite nettoyer la porte pivotante, notamment la face intérieure de la paroi tournée vers la chambre de cuisson, il est généralement contraint de démonter la porte pivotante du four. Pour ce faire, le boulanger doit généralement retirer des éléments constitutifs du carter du four, et notamment enlever plusieurs pièces de fixation comme des vis ou boulons.

Le besoin de nettoyage peut être fréquent lorsque la paroi comprend une vitre, ce qui est généralement le cas. En effet, on comprend aisément que la surface de la vitre tournée vers l'intérieur de la chambre de cuisson a tendance à se salir lors de la cuisson des pains. En outre, dans la mesure où la vitre pénètre dans la chambre de cuisson lorsque la porte pivotante est en position ouverte, on conçoit que la vitre se salisse rapidement.

Dès lors, les opérations de nettoyage nécessitant un démontage complet de la porte pivotante peuvent se révéler fastidieuses et le plus souvent constituent une perte de temps pour l'artisan.

### Objet et résumé de l'invention

Un but de l'invention est de fournir un four à soles remédiant aux inconvénients précités, permettant un entretien plus rapide des portes dudit four.

Ce but est atteint par le fait que la porte pivotante comporte en outre un état de maintenance dans lequel la porte pivotante est déplacée afin d'amener l'axe de pivotement de la porte pivotante dans une seconde position décalée par rapport à la première position, et, dans cet état de maintenance, la porte pivotante est libre de pivoter autour de son axe de pivotement selon un second sens de rotation opposé au premier sens de rotation vers une position de nettoyage dans laquelle la paroi s'étend vers l'extérieur de la première chambre de cuisson, grâce à quoi un utilisateur peut accéder aisément à la face de la paroi qui est tournée vers la première chambre de cuisson sans avoir à retirer la porte pivotante du four.

Ainsi, lorsque l'axe de pivotement est dans sa première position, la porte pivotante peut être amenée dans l'état ouvert ou dans l'état fermée. Lors du fonctionnement normal de la porte pivotante, c'est-à-dire lorsque cette dernière n'est pas en cours de maintenance ou nettoyage, l'axe de pivotement est dans la première position.

En revanche, conformément à l'invention, lorsque l'axe de pivotement est dans la seconde position, la porte pivotante se trouve dans un état de maintenance dans lequel elle peut être pivotée selon le second sens de rotation afin d'être amenée dans la position de nettoyage.

Lorsque la porte pivotante est dans son état de maintenance, la porte pivotante reste solidaire du four. En d'autres termes, le boulanger n'a pas à démonter complétement la porte pivotante afin d'amener cette dernière dans la position de nettoyage basculée dans laquelle elle va notamment être nettoyée. Dans l'état de maintenance, la paroi de la porte pivotante peut donc être pivotée de manière à s'étendre vers le boulanger, tout en restant maintenue au four, en conséquence de quoi le boulanger peut aisément accéder à la surface de la paroi qui est habituellement dirigée vers l'intérieur de la chambre de cuisson. Par suite, le boulanger peut très facilement nettoyer la paroi de la porte pivotante sans avoir à démonter complétement cette dernière.

Généralement, dans son état fermé, la paroi de la porte pivotante s'étend dans un plan incliné par rapport à un plan vertical, cette inclinaison étant telle que le bord inférieur de la paroi est plus proche de l'entrée de la chambre de cuisson que ne l'est le bord supérieur de ladite paroi.

Dans l'état de maintenance, la paroi peut donc être amenée dans une position inclinée par rapport à ce plan vertical, cette nouvelle inclinaison étant telle que le bord inférieur de la paroi est plus éloigné de l'entrée de la chambre de cuisson que ne l'est le bord supérieur de ladite paroi. En d'autres termes, dans l'état fermé, la paroi s'étend vers la chambre de cuisson, tandis qu'en position de nettoyage, la paroi s'étend vers le boulanger.

De préférence, dans l'état de maintenance, la porte pivotante peut pivoter selon le second sens de rotation d'un angle supérieur à 30° par rapport à un plan vertical.

De préférence, lorsque la porte pivotante est fermée, l'axe de pivotement étant donc en première position, la porte pivotante peut uniquement pivoter selon le premier sens de rotation. Autrement dit, dans l'état fermé, la porte pivotante ne peut pas pivoter selon le second sens de rotation. La porte ne peut donc pas atteindre la position de nettoyage. Des moyens de butée sont prévus à cet effet.

Avantageusement, le four selon l'invention comporte en outre une plaque inférieure disposée en dessous de l'entrée, ladite plaque intérieure s'étendant parallèlement à l'axe de pivotement, et, dans l'état fermé, le bord inférieur de la paroi vient en butée contre la plaque inférieure afin de bloquer le pivotement de la porte pivotante selon le second sens de rotation.

De préférence, le bord inférieur de la paroi vient en butée contre un bord avant de la plaque inférieur, ledit bord avant étant le plus proche de l'entrée de la chambre de cuisson.

Le bord avant est disposé de sorte que dans l'état fermé, la paroi est inclinée par rapport au plan vertical précité.

De préférence, la deuxième position est configurée de telle sorte que, lorsque la porte pivotante est dans l'état de maintenance, le bord inférieur de la paroi ne peut pas venir en butée contre la plaque inférieure, par quoi la porte pivotante est libre de pivoter selon le second sens de rotation au-delà de la plaque inférieure.

Autrement dit, lorsque l'axe de pivotement est dans la seconde position, le bord inférieur de la paroi ne rencontre pas la plaque inférieure, de sorte que la porte pivotante peut librement pivoter dans le second sens de rotation vers le boulanger afin d'être amenée en position de nettoyage.

Selon un mode de réalisation préférentiel, la seconde position est disposée au-dessus de la première position.

La distance verticale séparant les première et seconde positions est telle que, dans l'état de maintenance, le bord inférieur de la paroi est situé au-dessus de la plaque inférieure.

De préférence, la distance entre la seconde position et l'entrée est supérieure à la distance entre la première position et l'entrée. Cette distance est considérée selon une direction horizontale.

Selon un aspect particulièrement avantageux de l'invention, le four comporte en outre au moins un organe de couplage fixé au four, la porte pivotante comporte au moins un ergot coaxial à l'axe de pivotement, ledit ergot étant configuré pour coopérer avec l'organe de couplage, l'organe de couplage comprend un premier logement et un second logement destinés à recevoir ledit ergot, et la première position de l'axe de pivotement correspond à une position dans laquelle l'ergot est reçu dans le premier logement, tandis que la seconde position de l'axe de pivotement correspond à une position dans laquelle l'ergot est reçu dans le second logement.

Le second logement est distinct du premier logement.

Avantageusement, le premier logement s'ouvre vers le haut, tandis que le second logement s'ouvre vers l'entrée de la première chambre de cuisson.

Pour faciliter le déplacement de l'axe de pivotement entre les première et seconde positions, l'organe de couplage comporte avantageusement une surface d'appui reliant le premier logement au second logement, l'ergot coulissant contre la surface d'appui lorsque ledit ergot est déplacé entre le premier logement et le second logement.

Le premier logement est de préférence situé en dessous du second logement, entre le second logement et l'entrée de la première chambre de cuisson.

De manière particulièrement avantageuse, dans le cadre d'une maintenance importante, la porte pivotante selon l'invention est configurée pour être totalement démontée du four, afin d'être réparée ou changée par exemple. Pour ce faire, l'organe de couplage comporte en outre une ouverture permettant d'extraire l'ergot de l'organe de couplage.

On comprend que lorsque l'ergot est extrait de l'organe de couplage, la porte pivotante est découplée du four et peut donc être retirée du four.

De préférence, l'ouverture est disposée au-dessus du premier logement, entre le premier logement et l'entrée de la première chambre de cuisson.

Cette ouverture débouche vers le haut, de sorte que l'ergot peut être extrait par le haut, en soulevant la porte pivotante. Cette configuration avantageuse permet notamment de s'assurer que la porte pivotante ne peut pas se détacher du four en fonctionnement normal.

Le four comporte par ailleurs, et de manière préférentielle, deux organes de couplage disposés de part et d'autre des extrémités longitudinales de la porte pivotante.

Selon un mode de réalisation préférentiel, le four comporte en outre une plaque supérieure disposée au-dessus de la plaque inférieure, et la paroi de la porte pivotante comporte un carter ayant une portion formant enjoliveur s'étendant dans le prolongement de la plaque supérieure lorsque la porte pivotante est dans l'état fermé.

Un intérêt de la portion formant enjoliveur est de réaliser une surface plane continue avec la plaque supérieure afin de supporter l'enfourneur lors de son introduction dans la chambre de cuisson située immédiatement au-dessus de la plaque supérieure.

De préférence, le four comporte en outre une seconde chambre de cuisson disposée au-dessus de la première chambre de cuisson et destinée à être obturée par une seconde porte pivotante, et la plaque supérieure constitue un moyen de butée pour la seconde porte pivotante.

Pour permettre sa manipulation, la porte pivotante comprend en outre deux poignées de préhension fixées aux extrémités longitudinales de la paroi.

Selon une variante avantageuse, l'enfourneur vient en butée contre les poignées de préhension lors de son introduction dans la chambre de cuisson afin d'amener la porte pivotante depuis son état fermé vers son état ouvert.

### Brève description des dessins

L'invention sera mieux comprise à la lecture de la description qui qui suit d'un mode de réalisation de l'invention donné à titre d'exemple non limitatif, en référence aux dessins annexés, sur lesquels :
- la figure **1** est une vue en perspective du four à soles conforme à l'invention ;
- la figure **2** est vue de côté du four de la façade avant du four de la figure **1****,** les portes du four présentant des états différents ;
- la figure **3** représente une porte pivotante du four de la figure **2** dans son état fermé ;
- la figure **4** représente la porte pivotante de la figure **3** dans son état ouvert ;
- la figure **5** illustre la porte pivotante de la figure **3** dans son état de maintenance, en position de nettoyage ; et
- la figure **6** illustre l'extraction de la porte pivotante hors de l'organe de coupage.

### Description détaillée de l'invention

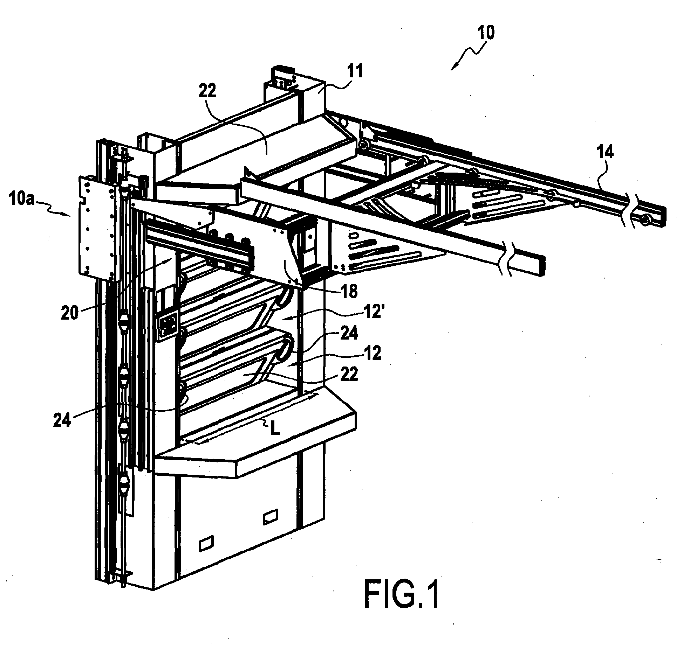

Sur la figure **1****,** on a représenté la façade avant **11** d'un four à soles **10.** Ce four à soles **10** comporte une pluralité de chambres de cuisson **13, 13', 13", 13"'** disposées les unes au-dessus des autres. Dans cet exemple, le four **10** comporte quatre chambres de cuisson qui sont obturées par des portes **12, 12', 12", 12"'.**

Le four à soles **10** selon l'invention comporte également un enfourneur **14** monté coulissant selon une direction horizontale perpendiculaire à la façade avant **11** du four **10 ;** l'enfourneur **14** étant plus précisément monté coulissant sur le corps **18** d'un élévateur **20.**

De manière connue, l'élévateur **20** permet le déplacement vertical de l'enfourneur **14** afin de l'amener devant l'une ou l'autre des chambres de cuisson **13, 13', 13", 13"'.**

Sur la figure **1****,** l'enfourneur **14** est disposé en section supérieure **10**a du four au niveau de la hotte d'extraction **22.**

Dans l'exemple de la figure **1****,** les portes du four sont présentées dans leur état fermé.

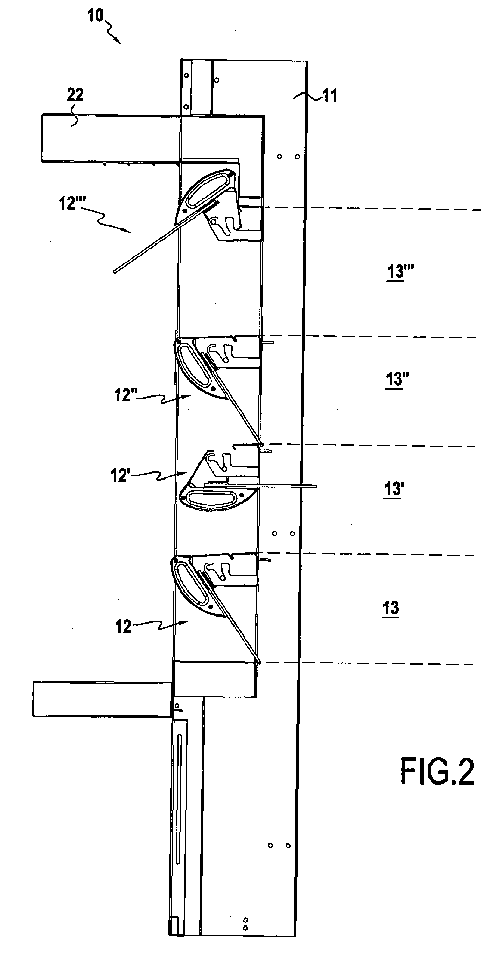

En se référant à la figure **2****,** qui est une vue de côté de la façade avant du four **10,** on constate que les portes selon l'invention peuvent se trouver dans différents états qui vont être ci-après décrits en détail.

La porte **12** disposée à l'entrée **13**a de la chambre de cuisson **13** est dans son état fermé, tandis que la porte **12'** associée à la chambre de cuisson **13' est** dans son état ouvert. Conformément à l'invention, les portes peuvent se trouver dans un état de maintenance, notamment illustré par la porte supérieure **12"'** associée à la chambre de cuisson **13"'.** On ajoute que la porte supérieure **12"'** est également en position de nettoyage.

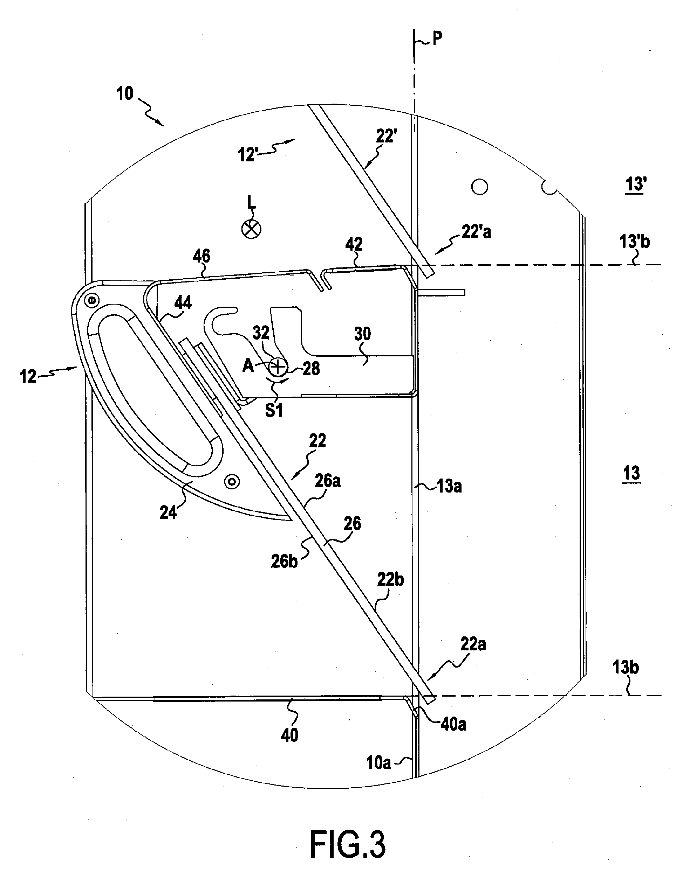

Dans les figures **3** à **6****,** on s'intéresse dorénavant à la porte **12** qui est associée à la chambre de cuisson inférieure **13.**

Sur la figure **3****,** on a représenté la porte **12** dans son état fermé.

Dans cet état fermé, la porte **12** obture l'entrée **13**a de la chambre de cuisson **13.** La porte **12** est montée pivotante autour d'un axe de pivotement **A.**

En se référant à nouveau à la figure **1****,** on constate que la porte **12** est munie d'une paroi **22** s'étendant selon une direction longitudinale **L.** On constate que l'axe de pivotement **A** est parallèle à la direction longitudinale **L.**

La porte pivotante **12** présente donc un état fermé dans lequel elle obture l'entrée **13**a d'une première chambre de cuisson à savoir la chambre de cuisson inférieure **13.**

On constate sur la figure **3** que la porte **12** comporte en outre une paire de poignées de préhension **24** qui sont fixées à la paroi **22,** cette dernière étant en outre pourvue d'une vitre **26.** La vitre **26** comporte une surface **26**a tournée vers l'intérieur de la chambre de cuisson **13** et une surface extérieure tournée vers l'extérieur du four.

Dans cet exemple, la porte **12** est munie de deux poignées de préhension **24** disposées aux extrémités longitudinales de ladite porte. Les poignées de préhension **24** servent à manipuler la porte, notamment elles permettent d'amener la porte dans ses différents états.

Comme cela est bien visible sur la figure **3****,** dans son état fermé, la paroi **22** de la porte pivotante **12** est inclinée par rapport à un plan **P** vertical, ce plan **P** étant également parallèle à la face avant **10**a du four **10.**

Dans l'état fermé représenté sur la figure **3****,** l'axe de pivotement **A** est dans une première position, qui est définie au fond d'un premier logement **28** ménagé dans un organe de couplage **30.** Dans cet exemple, l'axe de pivotement **A** est coaxial à un ergot **30** fixé à la porte **12.** On constate que ce premier logement **28** présente sensiblement la forme d'un « U » s'étendant et débouchant vers le haut de l'organe de couplage **30.** On précise ici que l'organe de couplage **30** est fixé solidairement à la façade avant **11** du four **10** en s'étendant vers l'extérieur dudit four.

Dans cet exemple, le four **10** comporte deux organes de couplage **30** qui sont disposés de part et d'autre des extrémités longitudinales de la porte pivotante **12.** Chaque organe de couplage coopère avec un ergot de la porte pivotante. Dans cet exemple, l'ergot **32** présente la forme d'un pion cylindrique. On pourrait cependant prévoir d'autres formes d'ergots permettant de réaliser une liaison pivot entre la porte pivotante **12** et l'organe de couplage **30.**

En se référant à la figure **3****,** on constate que le four **10** comporte également une plaque inférieure **40** qui s'étend dans un plan sensiblement horizontal parallèle à la surface de cuisson **13**b de la chambre de cuisson **13.**

Cette plaque inférieure **40** s'étend orthogonalement depuis la face avant **10**a du four **10.**

Le four comporte en outre une plaque supérieure **42** qui s'étend également dans un plan horizontal sensiblement parallèle à la surface de cuisson **13'**b d'une seconde chambre de cuisson **13'** disposée immédiatement au dessus de la première chambre de cuisson **13.**

La paroi **22** de la porte **12** comporte en outre un carter **44** qui a une portion formant enjoliveur **46** qui s'étend dans le prolongement de la plaque supérieure **42** lorsque la porte pivotante est dans l'état fermé.

Comme on le voit sur la figure **3****,** la portion formant enjoliveur **46** et la plaque supérieure **42** s'étendent sensiblement dans un même plan horizontal lorsque la porte est dans l'état fermé. L'ensemble constitué de la portion formant enjoliveur **46** et de la plaque supérieure **42** forme un appui pour l'enfourneur **14** lorsque celui-ci est introduit dans la seconde chambre de cuisson **13'.** En outre, la portion formant enjoliveur **46** s'étend selon la direction longitudinale **L** de la porte de manière à protéger l'organe de couplage **30.**

On ajoute que la plaque inférieure **40** est munie d'un bord d'extrémité avant **40**a qui constitue une butée pour le bord inférieur **22**a de la paroi **22.**

A l'aide de la figure **3****,** on comprend en effet que, dans l'état fermé, le bord inférieur **22**a de la paroi **22** s'étend légèrement en dessous du plan de la plaque inférieure **40,** grâce à quoi ce bord inférieur **22**a est susceptible de venir en butée contre le bord d'extrémité avant **40**a de la plaque inférieure **40.**

On comprend également que le bord d'extrémité avant **40**a de la plaque inférieure **40** empêche la porte pivotante **12** de pivoter dans un sens de rotation **S2** opposé à un premier sens de rotation **S1** d'ouverture de la porte pivotante **12,** lorsque l'axe de pivotement **A** est dans sa première position.

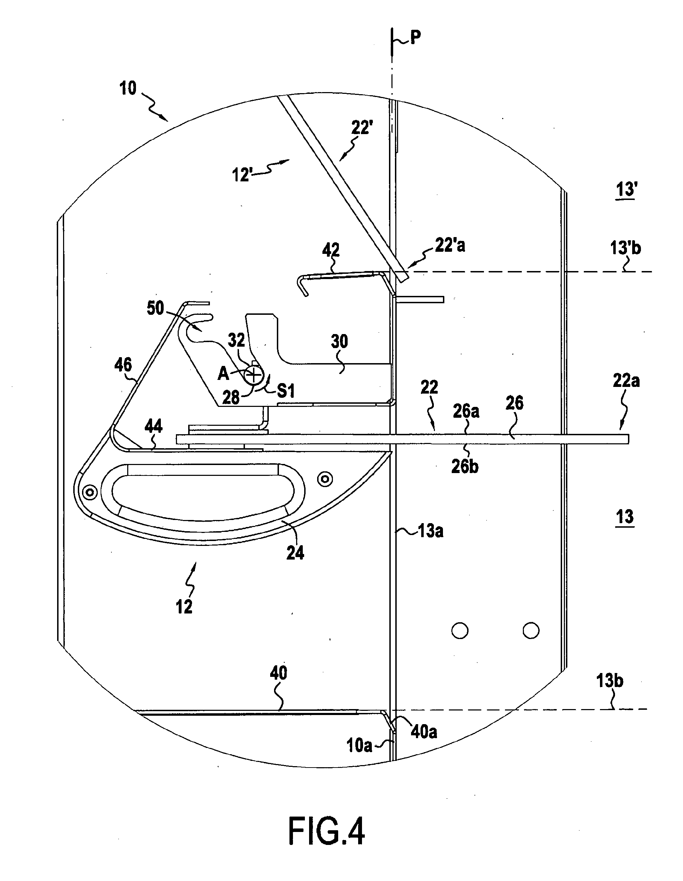

Sur la figure **4****,** on a représenté la porte pivotante **12** précédemment décrite dans son état ouvert.

Pour atteindre cet état ouvert, la porte pivotante **12** a pivoté autour de son axe de pivotement **A** selon le premier sens de rotation **S1** de sorte que, dans l'état ouvert, une partie de la paroi **22** s'étend à l'intérieur de la première chambre de cuisson **13.**

Dans l'état fermé, la paroi **22** s'étend dans un plan sensiblement horizontal.

A l'aide de la figure **4****,** on comprend que l'axe de pivotement **A** reste dans la première position lorsque la porte **12** se trouve dans l'état fermé. Plus exactement, l'ergot **32** a pivoté autour de l'axe de pivotement **A** selon le premier sens de rotation **S1** tout en restant dans le premier logement lorsque la porte pivotante **12** est passée de l'état fermé à l'état ouvert.

On précise que l'état ouvert de la figure **4** peut être obtenu en faisant pivoter manuellement la porte pivotante **12,** ou bien grâce à l'introduction de l'enfourneur **14** dans la chambre de cuisson **13,** une partie avant de l'enfourneur **14** venant en butée contre la poignée de préhension afin de pousser cette dernière dans un sens d'ouverture de la porte pivotante **12.**

En se référant aux figures **3** et **4****,** on constate en outre que la plaque supérieure **42** constitue également une butée pour le bord inférieur **22'**a de la paroi **22'** de la porte pivotante **12'** disposée immédiatement au-dessus de la porte pivotante **12.** Pour ce faire, la plaque supérieure **42** est pourvue d'un bord d'extrémité avant **42**a constituant une butée pour le bord inférieur **22'**a de la paroi **22'.**

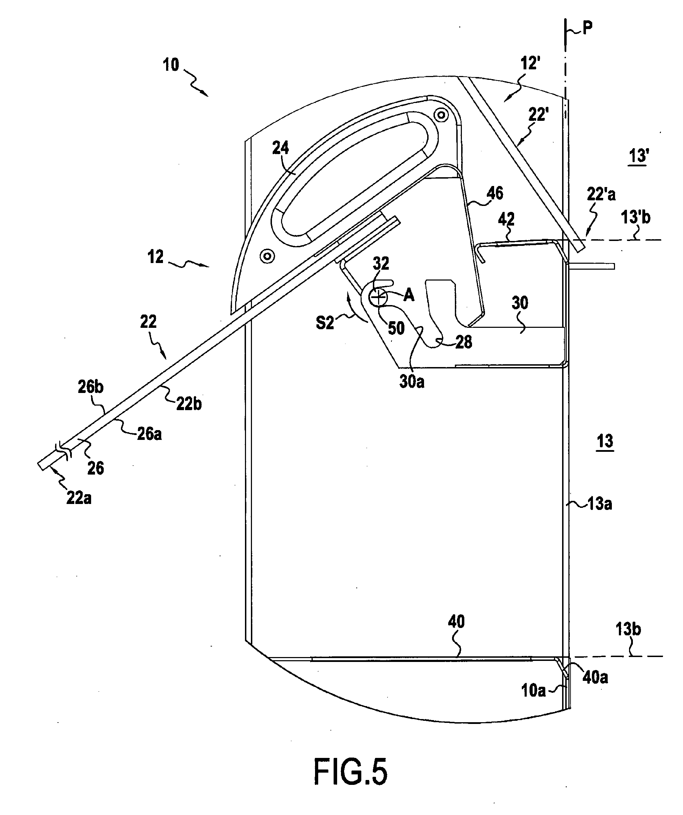

On se réfère maintenant à la figure **5****.** Conformément à l'invention, la porte pivotante **12** comporte en outre un état de maintenance, cet état de maintenance étant obtenu en déplaçant la porte pivotante **12** afin d'amener l'axe de pivotement **A** dans une seconde position décalée par rapport à la première position.

La seconde position est disposée au-dessus de la première position, la distance horizontale entre la seconde position et l'entrée étant supérieure à la distance horizontale entre la première position et l'entrée.

La seconde position de l'axe de pivotement **A** correspond à une position dans laquelle l'ergot **32** est reçu dans un second logement **50** ménagé dans l'organe de couplage **30.** On constate que le second logement **50** s'ouvre vers l'entrée **13**a de la première chambre de cuisson.

Pour faire passer l'ergot **32** depuis le premier logement **28** vers le second logement **50,** l'organe de couplage **30** comporte une surface d'appui **30**a qui relie le premier logement **28** au second logement **50,** l'ergot **32** étant configuré pour coulisser le long de la surface d'appui **30**a lorsque ledit ergot est déplacé entre le premier logement et le second logement.

Le second logement **50** comporte également une forme en U débouchant horizontalement dans un sens tourné vers la chambre de cuisson.

On constate également que le premier logement **28** est situé en dessous du second logement **50,** le premier logement **28** étant disposé entre le second logement **50** et l'entrée **13**a de la première chambre de cuisson **13.** Lorsque la porte pivotante **12** est dans son état de maintenance, c'est-à-dire lorsque l'axe de pivotement **A** est dans sa seconde position, l'ergot **32** étant reçu dans le second logement **50,** ladite porte **12** est libre de pivoter autour de l'axe de pivotement **A** selon le second sens de rotation **S2** opposé au premier sens de rotation **S1** d'ouverture de la porte.

Lorsque l'axe de pivotement **A** passe de la première position à la seconde position, on comprend que la porte **12** est élevée de sorte que le bord d'extrémité avant **40**a de la plaque inférieure **40** ne constitue plus une butée pour le bord inférieur **22**a de la paroi **22.** En d'autres termes, le bord inférieur **22**a de la paroi **22** passe au-dessus de la plaque inférieure **40,** ce qui a pour conséquence que la porte peut pivoter librement autour de son axe de pivotement **A** selon le second axe de rotation **S2,** au-delà de l'inclinaison qu'elle présente dans son état fermé.

Sur la figure **5****,** on a représenté la porte pivotante **12** dans sa position de nettoyage dans laquelle ladite porte a pivoté au maximum selon le sens de rotation **S2.** Dans cet exemple, la porte pivotante a pivoté d'un angle supérieur à 30° par rapport au plan vertical **P.** On comprend alors que la surface intérieure **26**a de la vitre **26** est facilement accessible par le boulanger afin d'être nettoyée. On comprend également que le second logement **50** est conformé de sorte que l'ergot **32** soit porté par une face inférieure **50** du second logement **50,** grâce à quoi l'organe de couplage **30** supporte la porte pivotante **12** lorsque cette dernière est dans son état de maintenance.

Après l'opération de nettoyage de la vitre **26,** le boulanger peut aisément replacer la porte pivotante **12** dans son état fermé en faisant tout d'abord pivoter la porte depuis sa position de nettoyage selon le premier sens de rotation **S1** autour de l'axe de pivotement **A** avant d'amener l'ergot **32** dans le premier logement **28,** ce qui a pour conséquence de déplacer l'axe de pivotement A depuis sa première position vers sa seconde position.

On comprend donc que l'utilisateur, à savoir le boulanger, peut accéder aisément à la face **22**b de la paroi **22** qui est tournée vers la première chambre de cuisson **13** sans avoir à retirer la porte pivotante **12** du four **10,** c'est-à-dire sans avoir à démonter totalement la porte.

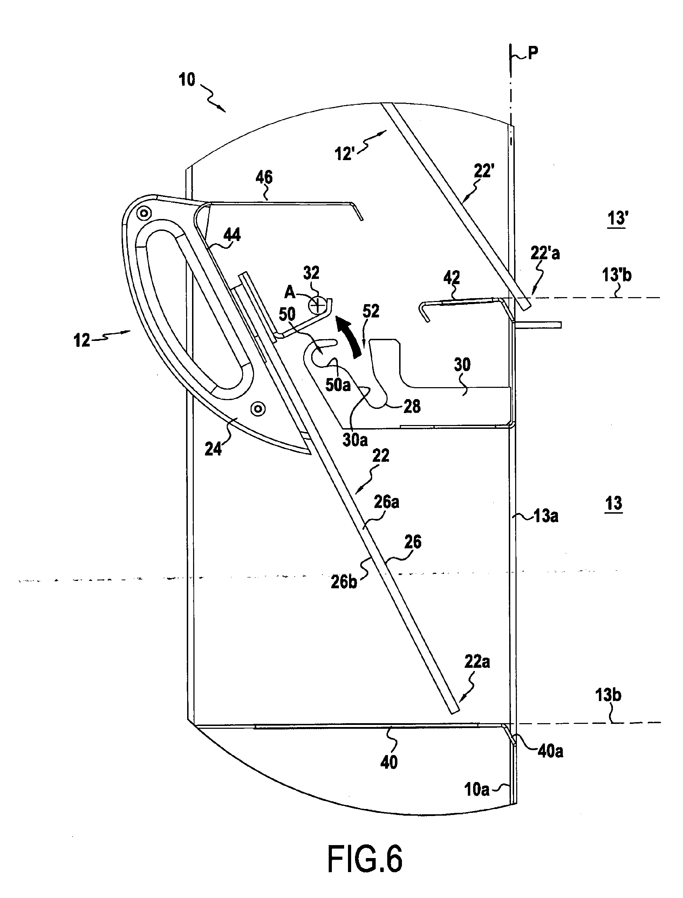

Selon un autre aspect avantageux de l'invention illustré sur la figure **6****,** l'organe de couplage **30** comporte en outre une ouverture **52** permettant d'extraire l'ergot **32** de l'organe de couplage **30.** Dans cet exemple, l'ouverture **52** est disposée au-dessus du premier logement **28,** entre le second logement **50** et l'entrée **13**a de la première chambre de cuisson **13.**

Cette configuration permet très aisément de démonter la porte pivotante **12** du four **10.**

Pour ce faire, on amène tout d'abord la porte depuis son état fermé vers son état de maintenance, avant de pousser légèrement la porte vers la paroi avant du four de sorte que l'ergot **32** sorte du second logement **50,** à la suite de quoi, on soulève la porte pivotante **12** afin d'extraire l'ergot **32** de l'organe de couplage **30** via l'ouverture **52.**

Le démontage de la porte pivotante **12** permet un découplage total de la porte, ce qui est particulièrement utile lorsque ladite porte pivotante doit être réparée ou bien changée. -

De la même façon, la porte pivotante **12** est raccrochée au four en introduisant les ergots dans l'organe de couplage via l'ouverture **52.**

## Revendications

1. Four à soles (10) comportant au moins une première chambre de cuisson (13) présentant une entrée (13a) et au moins une porte pivotante (12) munie d'une paroi (22) s'étendant selon une direction longitudinale (L), la porte pivotante étant destinée à obturer ladite entrée, dans lequel :
• la porte pivotante comprend un axe de pivotement (A) parallèle à la direction longitudinale (L),
• la porte pivotante (12) présente un état fermé dans lequel elle obture l'entrée de la première chambre de cuisson (13) et un état ouvert dans lequel la porte pivotante (12) n'obture pas l'entrée de la première chambre de cuisson (13) de sorte que, dans l'état ouvert, une partie de la paroi (22a) s'étend à l'intérieur de la première chambre de cuisson (13), la porte pivotante (12) passant de l'état fermé à l'état ouvert par pivotement autour de son axe de pivotement (A) selon un premier sens de rotation (S1), ledit axe de pivotement (A) étant dans une première position lorsque la porte pivotante (12) se trouve dans l'état ouvert ou dans l'état fermé,
le four étant **caractérisé en ce que** la porte pivotante (12) comporte en outre un état de maintenance dans lequel la porte pivotante (12) est déplacée afin d'amener l'axe de pivotement (A) de la porte pivotante (12) dans une seconde position décalée par rapport à la première position, et **en ce que**, dans cet état de maintenance, la porte pivotante (12) est libre de pivoter autour de son axe de pivotement (A) selon un second sens de rotation (S2) opposé au premier sens de rotation (S1) vers une position de nettoyage dans laquelle la paroi (22) s'etend vers l'extérieur de la première chambre de cuisson (13), grâce à quoi un utilisateur peut accéder aisément à la face (22b) de la paroi (22) qui est tournée vers la première chambre de cuisson (13) sans avoir à retirer la porte pivotante (12) du four.

2. Four selon la revendication 1, **caractérisé en ce qu'il** comporte en outre une plaque inférieure (40) disposée en dessous de l'entrée (13a), ladite plaque inférieure (40) s'étendant parallèlement à l'axe de pivotement (A), et **en ce que**, dans l'état fermé, un bord inférieur (22a) de la paroi (22) vient en butée contre la plaque inférieure (40) afin de bloquer le pivotement de la porte pivotante (12) selon le second sens de rotation (S2).

3. Four selon la revendication 2, **caractérisé en ce que** la deuxième position est configurée de telle sorte que, lorsque la porte pivotante (12) est dans l'état de maintenance, le bord inférieur (22a) de la paroi (22) ne peut pas venir en butée contre la plaque inférieure (40), par quoi la porte pivotante (12) est libre de pivoter selon le second sens de rotation au-delà de la plaque inférieure (40).

4. Four selon la revendication 3, **caractérisé en ce que** la seconde position est disposée au-dessus de la première position.

5. Four selon la revendication 3 ou 4, **caractérisé en ce que** la distance entre la seconde position et l'entrée (13a) est supérieure à la distance entre la première position et l'entrée (13a).

6. Four selon l'une quelconque des revendications 1 à 5, **caractérisé en ce qu'**il comporte en outre au moins un organe de couplage (30) fixé au four, **en ce que** la porte pivotante (12) comporte au moins un ergot (32) coaxial à l'axe de pivotement, ledit ergot (32) étant configuré pour coopérer avec l'organe de couplage (30), **en ce que** l'organe de couplage (30) comprend un premier logement (28) et un second logement (50) destinés à recevoir ledit ergot (32), et **en ce que** la première position de l'axe de pivotement (A) correspond à une position dans laquelle l'ergot (32) est reçu dans le premier logement (28), tandis que la seconde position de l'axe de pivotement (A) correspond à une position dans laquelle l'ergot (32) est reçu dans le second logement (50).

7. Four selon la revendication 6, **caractérisé en ce que** le premier logement (28) s'ouvre vers le haut, tandis que le second logement (50) s'ouvre vers l'entrée de la première chambre de cuisson (13).

8. Four selon la revendication 6 ou 7, **caractérisé en ce que** l'organe de couplage (30) comporte une surface d'appui (30a) reliant le premier logement (28) au second logement (50), l'ergot (32) coulissant contre la surface d'appui lorsque ledit ergot (32) est déplacé entre le premier logement (28) et le second logement (50).

9. Four selon l'une quelconque des revendications 6 à 8, **caractérisé en ce que** le premier logement (28) est situé en dessous du second logement (50), entre le second logement (50) et l'entrée (13a) de la première chambre de cuisson (13).

10. Four selon l'une quelconque des revendications 6 à 9, **caractérisé en ce que** l'organe de couplage (30) comporte en outre une ouverture (52) permettant d'extraire l'ergot (32) de l'organe de couplage (30).

11. Four selon la revendication 10, **caractérisé en ce que** l'ouverture (52) est disposée au-dessus du premier logement (28), entre le second logement (50) et l'entrée de la première chambre de cuisson (13).

12. Four selon l'une quelconque des revendications 6 à 11, **caractérisé en ce qu'**il comporte deux organes de couplage (30) disposés de part et d'autre des extrémités longitudinales de la porte pivotante (12).

13. Four selon la revendication 2 et l'une quelconque des revendications 1 à 12, **caractérisé en ce qu'**il comporte en outre une plaque supérieure (42) disposée au-dessus de la plaque inférieure, **en ce que** la paroi de la porte pivotante comporte un carter (44) ayant une portion formant enjoliveur (46) s'étendant dans le prolongement de la plaque supérieure (42) lorsque la porte pivotante (12) est dans l'état fermé.

14. Four selon la revendication 13, **caractérisé en ce qu'il** comporte en outre une seconde chambre de cuisson (13') disposée au-dessus de la première chambre de cuisson (13) et destinée à être obturée par une seconde porte pivotante (12'), et **en ce que** la plaque supérieure (42) constitue un moyen de butée (42a) pour la seconde porte pivotante (12').

15. Four selon l'une quelconque des revendications 1 à 14, **caractérisé en ce que** la porte pivotante (12) comprend en outre deux poignées de préhension (24) fixées aux extrémités longitudinales de la paroi (22).

16. Four selon l'une quelconque des revendications 1 à 15, **caractérisé en ce que**, dans l'état de maintenance, la porte pivotante (12) peut pivoter selon le second sens de rotation (52) d'un angle supérieur à 30° par rapport à un plan vertical (P).

## Patentansprüche

1. Herdofen (10), umfassend mindestens einen ersten Backraum (13), die einen Eingang (13a) und mindestens eine Schwenktür (12) aufweist, die mit einer Wand (22) versehen ist, die sich in Längsrichtung (L) erstreckt, wobei die Schwenktür dazu bestimmt ist, den Eingang zu verschließen, bei dem:
• die Schwenktür eine Schwenkachse (A) parallel zur Längsrichtung (L) umfasst,
• die Schwenktür (12) einen geschlossenen Zustand aufweist, in dem sie den Eingang des ersten Backraums (13) verschließt, und einen offenen Zustand, in dem die Schwenktür (12) den Eingang des ersten Backraums (13) nicht verschließt, so dass sich im offenen Zustand ein Teil der Wand (22a) im Inneren des ersten Backraums (13) erstreckt, wobei die Schwenktür (12) vom geschlossenen Zustand in den offenen Zustand durch Schwenken um ihre Schwenkachse (A) in eine erste Drehrichtung (S1) übergeht, wobei die Schwenkachse (A) in einer ersten Position ist, wenn sich die Schwenktür (12) im offenen Zustand oder im geschlossenen Zustand befindet,
wobei der Ofen **dadurch gekennzeichnet ist, dass** die Schwenktür (12) ferner einen Wartungszustand umfasst, in dem die Schwenktür (12) verschoben wird, um die Schwenkachse (A) der Schwenktür (12) in eine zweite Position zu bringen, die in Bezug zur ersten Position versetzt ist, und dass in diesem Wartungszustand die Schwenktür (12) frei um ihre Schwenkachse (A) in eine zweite Drehrichtung (S2), die zur ersten Drehrichtung (S1) entgegengesetzt ist, in eine Reinigungsposition schwenken kann, in der sich die Wand (22) nach außen zum Backraum (13) erstreckt, wodurch ein Benutzer leicht auf die Fläche (22b) der Wand (22) zugreifen kann, die zum ersten Backraum (13) gewandt ist, ohne die Schwenktür (12) des Ofens abnehmen zu müssen.

2. Ofen nach Anspruch 1, **dadurch gekennzeichnet, dass** er ferner eine untere Platte (40) umfasst, die unter dem Eingang (13a) angeordnet ist, wobei sich die untere Platte (40) parallel zur Schwenkachse (A) erstreckt, und dass im geschlossenen Zustand ein unterer Rand (22a) der Wand (22) an der unteren Platte (40) zum Anschlag gelangt, um das Schwenken der Schwenktür (12) in die zweite Drehrichtung (S2) zu blockieren.

3. Ofen nach Anspruch 2, **dadurch gekennzeichnet, dass** die zweite Position derart konfiguriert ist, dass, wenn sich die Schwenktür (12) im Wartungszustand befindet, der untere Rand (22a) der Wand (22) nicht an der unteren Platte (40) zum Anschlag gelangen kann, weshalb die Schwenktür (12) frei in die zweite Drehrichtung über die untere Platte (40) hinaus schwenken kann.

4. Ofen nach Anspruch 3, **dadurch gekennzeichnet, dass** die zweite Position über der ersten Position angeordnet ist.

5. Ofen nach Anspruch 3 oder 4, **dadurch gekennzeichnet, dass** der Abstand zwischen der zweiten Position und dem Eingang (13a) größer als der Abstand zwischen der ersten Position und dem Eingang (13a) ist.

6. Ofen nach einem der Ansprüche 1 bis 5, **dadurch gekennzeichnet, dass** er ferner mindestens ein Kopplungselement (30) umfasst, das am Ofen befestigt ist, dass die Schwenktür (12) mindestens einen Haken (32) koaxial zur Schwenkachse umfasst, wobei der Haken (32) derart konfiguriert ist, dass er mit dem Kopplungselement (30) zusammenwirkt, dass das Kopplungselement (30) eine erste Lagerung (28) und eine zweite Lagerung (50) umfasst, die dazu bestimmt sind, den Haken (32) aufzunehmen, und dass die erste Position der Schwenkachse (A) einer Position entspricht, in der der Haken (32) in der ersten Lagerung (28) aufgenommen ist, während die zweite Position der Schwenkachse (A) einer Position entspricht, in der der Haken (32) in der zweiten Lagerung (50) aufgenommen ist.

7. Ofen nach Anspruch 6, **dadurch gekennzeichnet, dass** sich die erste Lagerung (28) nach oben öffnet, während sich die zweite Lagerung (50) zum Eingang des ersten Backraums (13) hin öffnet.

8. Ofen nach Anspruch 6 oder 7, **dadurch gekennzeichnet, dass** das Kopplungselement (30) eine Auflagefläche (30a) umfasst, die die erste Lagerung (28) mit der zweiten Lagerung (50) verbindet, wobei der Haken (32) an der Auflagefläche gleitet, wenn der Haken (32) zwischen der ersten Lagerung (28) und der zweiten Lagerung (50) verschoben wird.

9. Ofen nach einem der Ansprüche 6 bis 8, **dadurch gekennzeichnet, dass** die erste Lagerung (28) unter der zweiten Lagerung (50) zwischen der zweiten Lagerung (50) und dem Eingang (13a) des ersten Backraums (13) angeordnet ist.

10. Ofen nach einem der Ansprüche 6 bis 9, **dadurch gekennzeichnet, dass** das Kopplungselement (30) ferner eine Öffnung (52) umfasst, die es ermöglicht, den Haken (32) aus dem Kopplungselement (30) zu ziehen.

11. Ofen nach Anspruch 10, **dadurch gekennzeichnet, dass** die Öffnung (52) über der ersten Lagerung (28) zwischen der zweiten Lagerung (50) und dem Eingang des ersten Backraums (13) angeordnet ist.

12. Ofen nach einem der Ansprüche 6 bis 11, **dadurch gekennzeichnet, dass** er zwei Kopplungselemente (30) umfasst, die beiderseits der Längsenden der Schwenktür (12) angeordnet sind.

13. Ofen nach Anspruch 2 und einem der Ansprüche 1 bis 12, **dadurch gekennzeichnet, dass** er ferner eine obere Platte (42) umfasst, die über der unteren Platte angeordnet ist, dass die Wand der Schwenktür ein Gehäuse (44) umfasst, das einen Abschnitt aufweist, der ein Dekor (46) bildet, der sich in der Verlängerung der oberen Platte (42) erstreckt, wenn die Schwenktür (12) im geschlossenen Zustand ist.

14. Ofen nach Anspruch 13, **dadurch gekennzeichnet, dass** er ferner einen zweiten Backraum (13') umfasst, der über dem ersten Backraum (13) angeordnet und dazu bestimmt ist, durch eine zweite Schwenktür (12`) verschlossen zu werden, und dass die obere Platte (42) ein Anschlagmittel (42a) für die zweite Schwenktür (12`) darstellt.

15. Ofen nach einem der Ansprüche 1 bis 14, **dadurch gekennzeichnet, dass** die Schwenktür (12) ferner zwei Griffe (24) umfasst, die an den Längsenden der Wand (22) befestigt sind.

16. Ofen nach einem der Ansprüche 1 bis 15, **dadurch gekennzeichnet, dass** im Wartungszustand die Schwenktür (12) in die zweite Drehrichtung (52) um einen größeren Winkel als 30° in Bezug zur Vertikalebene (P) schwenken kann.

## Claims

1. A deck oven (10) including at least one first cooking chamber (13) having an entry (13a) and at least one swiveling door (12) provided with a wall (22) extending along a longitudinal direction (L), the swiveling door being intended for obturating said entry, wherein:
• the swiveling door comprises a swivel axis (A) parallel to the longitudinal direction (L),
• the swiveling door (12) has a closed state in which it obturates the entry of the first cooking chamber (13) and an open state in which the swiveling door (12) does not obturate the entry of the first cooking chamber (13) so that, in the open state, a portion of the wall (22a) extends inside the first cooking chamber (13), the swiveling door (12) passing from the closed state to the open state by swiveling around its swivel axis (A) according to a first direction of rotation (S1), said swivel axis (A) being in a first position when the swiveling door (12) is in the open state or in the closed state,
the oven being **characterized in that** the swiveling door (12) further includes a maintenance state in which the swiveling door (12) is moved so as to bring the swivel axis (A) of the swiveling door (12) into a second position shifted with respect to the first position, and **in that**, in this maintenance state, the swiveling door (12) is free to swivel around its swivel axis (A) according to a second direction of rotation (S2) opposite to the first direction of rotation (S1) towards a cleaning position in which the wall (22) extends towards the outside of the first cooking chamber (13), by means of which a user may easily access the face (22b) of the wall (22) which is turned towards the first cooking chamber (13) without having to remove the swiveling door (12) of the oven.

2. The oven according to claim 1, **characterized in that** it further includes a lower plate (40) positioned below the entry (13a), said lower plate (40) extending parallel to the swivel axis (A), and **in that**, in the closed state, a lower edge (22a) of the wall (22) will abut against the lower plate (40) in order to block the swiveling of the swiveling door (12) according to the second direction of rotation (S2).

3. The oven according to claim 2, **characterized in that** the second position is configured so that, when the swiveling door (12) is in the maintenance state, the lower edge (22a) of the wall (22) cannot abut against the lower plate (40), whereby the swiveling door (12) is free to swivel according to the second direction of rotation beyond the lower plate (40).

4. The oven according to claim 3, **characterized in that** the second position is positioned above the first position.

5. The oven according to claim 3 or 4, **characterized in that** the distance between the second position and the entry (13a) is greater than the distance between the first position and the entry (13a).

6. The oven according to any of claims 1 to 5, **characterized in that** it further includes at least one coupling member (30) attached to the oven, **in that** the swiveling door (12) includes at least one lug (32) coaxial with the swivel axis, said lug (32) being configured so as to cooperate with the coupling member (30), **in that** the coupling member (30) comprises a first housing (28) and a second housing (50) intended to receive said lug (32), and **in that** the first position of the swivel axis (A) corresponds to a position in which the lug (32) is received into the first housing (28), while the second position of the swivel axis (A) corresponds to a position in which the lug (32) is received into the second housing (50).

7. The oven according to claim 6, **characterized in that** the first housing (28) opens upwards, while the second housing (50) opens towards the entry of the first cooking chamber (13).

8. The oven according to claim 6 or 7, **characterized in that** the coupling member (30) includes a supporting surface (30a) connecting the first housing (28) to the second housing (50), the lug (32) sliding against the supporting surface when said lug (32) is moved between the first housing (28) and the second housing (50).

9. The oven according to any of claims 6 to 8, **characterized in that** the first housing (28) is located below the second housing (50), between the second housing (50) and the entry (13a) of the first cooking chamber (13).

10. The oven according to any of claims 6 to 9, **characterized in that** the coupling member (30) further includes an aperture (52) allowing extraction of the lug (32) from the coupling member (30).

11. The oven according to claim 10, **characterized in that** the aperture (52) is positioned above the first housing (28), between the second housing (50) and the entry of the first cooking chamber (13).

12. The oven according to any of claims 6 to 11, **characterized in that** it includes two coupling members (30) positioned on either side of the longitudinal ends of the swiveling door (12).

13. The oven according to claim 2 and to any of claims 1 to 12, **characterized in that** it further includes an upper plate (42) positioned above the lower plate, **in that** the wall of the swiveling door includes a case (44) having a trim-forming portion (46) extending in the extension of the upper plate (42) when the swiveling door (12) is in the closed state.

14. The oven according to claim 13, **characterized in that** it further includes a second cooking chamber (13') positioned above the first cooking chamber (13) and intended to be obturated by a second swiveling door (12'), and **in that** the upper plate (42) forms an abutment means (42a) for the second swiveling door (12').

15. The oven according to any of claims 1 to 14, **characterized in that** the swiveling door (12) further includes two gripping handles (24) attached to the longitudinal ends of the wall (22).

16. The oven according to any of claims 1 to 15, **characterized in that**, in the maintenance state, the swiveling door (12) may swivel according to the second direction of rotation (52) by an angle of more than 30° with respect to a vertical plane (P).
